# EUROPEAN PATENT APPLICATION

(11) **EP 4 039 487 A1**
(43) Date of publication of application: **10.08.2022**
(21) Application number: 20870760.4
(22) Date of filing: 25.03.2020
(51) Int. Cl.: B41M 5/52

(54) **THERMAL-TRANSFER IMAGE-RECEIVING SHEET AND PRINTED MATTER**

(30) Priority: 30.09.2019 JP 2019181020
(71) Applicant: Dai Nippon Printing Co., Ltd., Tokyo 162-8001 (JP)
(72) Inventor: SHIMOGATA, Takanori, Tokyo 162-8001 (JP)
(74) Representative: Müller-Boré & Partner Patentanwälte PartG mbB
(86) International application number: PCT/JP2020/013229
(87) International publication number: WO 2021/065040

(57) **Abstract**

[Object] To provide a thermal transfer image-receiving sheet that improves the density of an image that is to be formed on a receiving layer, that has high protective layer transferability, and that enables the production of a printed material having high specular gloss.

[Solution] The thermal transfer image-receiving sheet according to the present disclosure includes a receiving layer, a front substrate, a porous layer, and a rear substrate in this order and further includes a metal-containing layer interposed between the receiving layer and the front substrate or between the front substrate and the porous layer. The thermal conductivity of the thermal transfer image-receiving sheet which is measured on the receiving layer-side is 0.38 W/m·K or less. The Martens hardness of the thermal transfer image-receiving sheet which is measured on the receiving layer-side is 10.0 N/mm² or less. The 45-degree specular gloss of the thermal transfer image-receiving sheet which is measured on the receiving layer-side is 800 or more.

## Description

### Technical Field

The present disclosure relates to a thermal transfer image-receiving sheet and a printed material.

### Background Art

Various types of printing methods have been known in the related art. Among those, a sublimation thermal transfer printing method enables color shades to be readily adjusted at will, therefore has excellent reproducibility of intermediate colors and shades, and enables the formation of high-quality images comparable to silver halide prints.

A sublimation thermal transfer printing method is a method for producing a printed material, the method including superimposing a thermal transfer sheet including a dye layer and a thermal transfer image-receiving sheet including a receiving layer on each other and heating the thermal transfer sheet with a thermal head included in a printer in order to cause a sublimation dye included in the dye layer to transfer to the receiving layer included in the thermal transfer image-receiving sheet and form an image.

There has been an approach to transferring a protective layer from the thermal transfer sheet onto the receiving layer included in the printed material produced by the above-described method in order to enhance the durability and the like of the printed material.

Printed materials produced by a sublimation thermal transfer printing method are required to have a great variety of graphical design functions. For example, the printed materials are required to have high specular glossiness.

### Summary of Invention

### Technical Problem

A thermal transfer image-receiving sheet that includes a receiving layer, a front substrate, a metal-containing layer, a rear substrate, and a rear surface layer has been used in order to manufacture printed materials having high specular glossiness.

There has been a demand for a further increase in the image density of a printed material produced using the thermal transfer image-receiving sheet that includes a metal-containing layer. In addition, when a protective layer is transferred onto a receiving layer, a part of the protective layer may fail to be transferred. Thus, there has been room for improvement in terms of protective layer transferability.

An object of the present disclosure is to provide a thermal transfer image-receiving sheet that improves the density of an image that is to be formed on the receiving layer, that has high protective layer transferability, and that enables the production of a printed material having high specular glossiness and a printed material produced using the thermal transfer image-receiving sheet.

### Solution to Problem

The thermal transfer image-receiving sheet according to the present disclosure includes a receiving layer, a front substrate, a porous layer, and a rear substrate in this order,
the thermal transfer image-receiving sheet further including a metal-containing layer interposed between the receiving layer and the front substrate or between the front substrate and the porous layer,
wherein a thermal conductivity of the thermal transfer image-receiving sheet, the thermal conductivity being measured on a receiving layer-side of the thermal transfer image-receiving sheet, is 0.38 W/m.K or less,
wherein a Martens hardness of the thermal transfer image-receiving sheet, the Martens hardness being measured on the receiving layer-side, is 10.0 N/mm² or less, and
wherein a 45-degree specular gloss of the thermal transfer image-receiving sheet, the 45-degree specular gloss being measured on the receiving layer-side, is 800 or more.

The printed material according to the present disclosure is a printed material produced using the above-described thermal transfer image-receiving sheet,
wherein an image is formed on the receiving layer, and
wherein the printed material includes a protective layer disposed on the receiving layer.

### Advantageous Effects of Invention

According to the present disclosure, a thermal transfer image-receiving sheet that improves the density of an image that is to be formed on the receiving layer, that has high protective layer transferability, and that enables the production of a printed material having high specular glossiness can be provided.

According to the present disclosure, a printed material produced using the thermal transfer image-receiving sheet can be also provided. Brief Description of Drawings

[Fig. 1] Fig. 1 is a schematic cross-sectional view of an embodiment of a thermal transfer image-receiving sheet according to the present disclosure.
[Fig. 2] Fig. 2 is a schematic cross-sectional view of an embodiment of a thermal transfer image-receiving sheet according to the present disclosure.
[Fig. 3] Fig. 3 is a schematic cross-sectional view of an embodiment of a thermal transfer image-receiving sheet according to the present disclosure.
[Fig. 4] Fig. 4 is a schematic cross-sectional view of an embodiment of a thermal transfer image-receiving sheet according to the present disclosure.
[Fig. 5] Fig. 5 is a schematic cross-sectional view of an embodiment of a thermal transfer image-receiving sheet according to the present disclosure.
[Fig. 6] Fig. 6 is a schematic cross-sectional view of an embodiment of a printed material according to the present disclosure.
[Fig. 7] Fig. 7 is a schematic cross-sectional view of an embodiment of a printed material according to the present disclosure. Description of Embodiments

### (Thermal Transfer Image-Receiving Sheet)

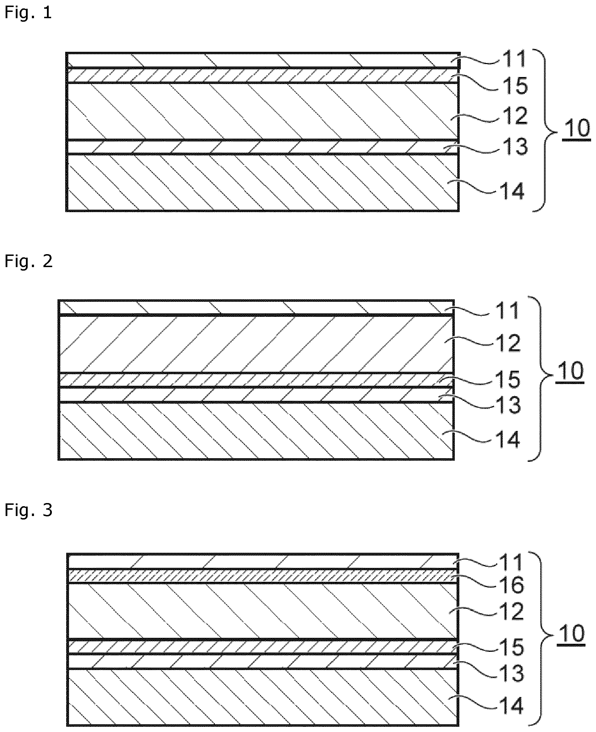

The thermal transfer image-receiving sheet 10 according to the present disclosure includes, as illustrated in Figs. 1 and 2, a receiving layer 11, a front substrate 12, a porous layer 13, and a rear substrate 14. The thermal transfer image-receiving sheet 10 further includes a metal-containing layer 15 interposed between the receiving layer 11 and the front substrate 12 or between the front substrate 12 and the porous layer 13.

In one embodiment, the thermal transfer image-receiving sheet 10 according to the present disclosure includes, as illustrated in Fig. 3, a primer layer 16 interposed between the receiving layer 11 and the front substrate 12.

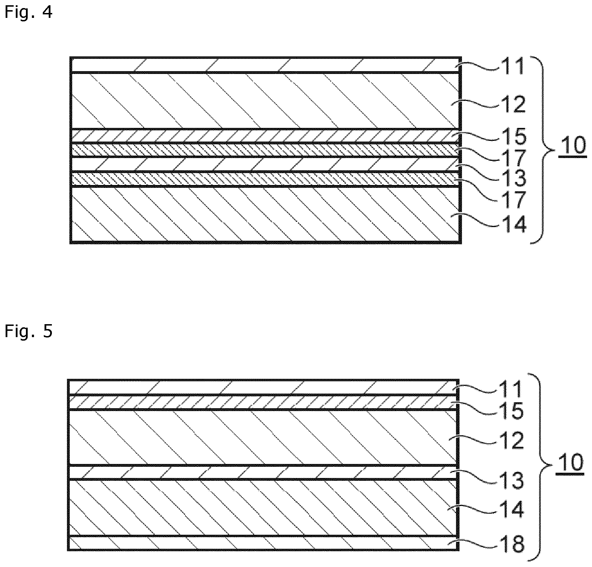

In one embodiment, the thermal transfer image-receiving sheet 10 according to the present disclosure includes an adhesive layer 17 interposed between any two layers, such as between the metal-containing layer 15 and the porous layer 13 or between the porous layer 13 and the rear substrate 14, as illustrated in Fig. 4.

In one embodiment, the thermal transfer image-receiving sheet 10 according to the present disclosure includes, as illustrated in Fig. 5, a rear surface layer 18 disposed below the rear substrate 14.

In one embodiment, the thermal transfer image-receiving sheet according to the present disclosure includes an intermediate layer (not illustrated in the drawing) that is a layer adjacent to the porous layer 13.

In one embodiment, the thermal transfer image-receiving sheet according to the present disclosure includes a porous layer, a front substrate, and a receiving layer (not illustrated in the drawing) disposed below the rear substrate. This allows images to be formed on both surfaces of the thermal transfer image-receiving sheet.

The thermal conductivity of the thermal transfer image-receiving sheet according to the present disclosure is 0.38 W/m.K or less. This enhances the density of an image that is to be formed on the receiving layer and the transferability of the protective layer to the receiving layer.

In consideration of image density and protective layer transferability, the thermal conductivity of the thermal transfer image-receiving sheet is preferably 0.30 W/m·K or more and 0.38 W/m·K or less and is further preferably 0.33 W/m.K or more and 0.37 W/m.K or less.

In the present disclosure, thermal conductivity is measured on the receiving layer-side of the thermal transfer image-receiving sheet using a thermal conductivity meter (QTM-500 produced by Kyoto Electronics Manufacturing Co., Ltd.) in accordance with the transient hot wire method described in JIS R 2616 (published in 2001).

The Martens hardness of the thermal transfer image-receiving sheet according to the present disclosure is 10.0 N/mm² or less. This enhances the density of an image that is to be formed on the receiving layer and the transferability of the protective layer to the receiving layer.

In consideration of image density and protective layer transferability, the Martens hardness of the thermal transfer image-receiving sheet is preferably 10.0 N/mm² or less and is further preferably 8.0 N/mm² or less. The above Martens hardness is particularly preferably 5.0 N/mm² or less in order to effectively reduce the likelihood of the thermal transfer image-receiving sheet curling when the thermal transfer image-receiving sheet is left to stand or when an image is formed on the thermal transfer image-receiving sheet and the thermal transfer image-receiving sheet is then left to stand (hereinafter, this phenomenon may be referred to simply as "curling inhibiting property").

In the present disclosure, Martens hardness is measured on the receiving layer-side of the thermal transfer image-receiving sheet using a hardness meter (FISCHERSCOPE H100VS produced by Fitech) in accordance with ISO 14577:2002.

The 45-degree specular gloss of the thermal transfer image-receiving sheet according to the present disclosure is 800 or more. This enables the production of a printed material having high glossiness.

The 45-degree specular gloss of the thermal transfer image-receiving sheet is more preferably 1000 or more.

In the present disclosure, the 45-degree specular gloss of the thermal transfer image-receiving sheet is determined by measuring the 45-degree specular gloss of the receiving layer using a gloss meter (VG 7000 produced by Nippon Denshoku Industries Co., Ltd.) in accordance with the method for measuring 45-degree specular gloss described in JIS Z 8741 (published in 1997).

Details of each of the layers included in the thermal transfer image-receiving sheet according to the present disclosure are described below.

### (Receiving Layer)

The receiving layer is a layer that receives a sublimation dye and maintains the resulting image.

The receiving layer contains at least one resin material. The resin material is transparent. Examples thereof include an olefin resin, a vinyl resin, a (meth)acrylic resin, a cellulose resin, a polyester, an amide resin, a polycarbonate, a styrene resin, a urethane resin, and an ionomer resin.

The content of the resin material in the receiving layer is preferably 80% by mass or more and 98% by mass or less and is further preferably 90% by mass or more and 98% by mass or less.

In one embodiment, the receiving layer contains at least one release agent. This enhances releasability from a thermal transfer sheet.

Examples of the release agent include a solid wax, a surfactant, a silicone oil, and a silicone resin.

Examples of the solid wax include a polyethylene wax, an amide wax, and a Teflon (registered trademark) powder.

Examples of the surfactant include a fluorinated surfactant and a phosphoric acid ester surfactant.

The silicone oil is preferably a modified silicone oil. Examples of the modified silicone oil include amino-modified silicone, epoxy-modified silicone, aralkyl-modified silicone, epoxy aralkyl-modified silicone, alcohol-modified silicone, vinyl-modified silicone, and urethane-modified silicone. Among these, epoxy-modified silicone, aralkyl-modified silicone, and epoxy aralkyl-modified silicone are particularly preferable.

The content of the release agent in the receiving layer is preferably 0.5% by mass or more and 20% by mass or less and is further preferably 0.5% by mass or more and 10% by mass or less. This enables releasability from a thermal transfer sheet to be enhanced while maintaining the transparency of the receiving layer.

The receiving layer may contain additives. Examples of the additives include a plasticizer, a filler, an ultraviolet stabilizer, an anti-coloring agent, a surfactant, a fluorescent whitener, a delustering agent, a deodorizer, a fire retardant, an weatherproofing agent, an antistatic agent, a yarn friction-reducing agent, a slipping agent, an antioxidant, an ion exchanger, a dispersant, an ultraviolet absorber, and coloring materials, such as a pigment and a dye.

The thickness of the receiving layer is preferably 0.5 µm or more and 20 µm or less and is further preferably 1.0 µm or more and 10 µm or less. This further enhances the density of an image that is to be formed on the receiving layer and the property of reducing the likelihood of the thermal transfer image-receiving sheet curling in a concave manner.

The receiving layer can be formed by dispersing or dissolving the above materials in water or an appropriate solvent, applying the resulting coating liquid onto the front substrate or the like, and drying the resulting coating film. For coating, various coating methods known in the related art, such as roll coating, reverse roll coating, gravure coating, reverse gravure coating, bar coating, and rod coating, may be used.

### (Front Substrate)

A film made of a resin material (hereinafter, such a film is referred to simply as "resin film") can be used as a front substrate. Examples of the resin material include polyesters, such as polyethylene terephthalate (PET), polybutylene terephthalate (PBT), polyethylene naphthalate (PEN), 1,4-polycyclohexylenedimethylene terephthalate, and a terephthalic acid-cyclohexanedimethanol-ethylene glycol copolymer; polyamides, such as Nylon 6 and Nylon 6,6; polyolefins, such as polyethylene (PE), polypropylene (PP), and polymethylpentene; vinyl resins, such as polyvinyl chloride, polyvinyl alcohol (PVA), polyvinyl acetate, a vinyl chloride-vinyl acetate copolymer, polyvinyl butyral, and polyvinylpyrrolidone (PVP); (meth)acrylic resins, such as a polyacrylate and a polymethacrylate; imide resins, such as a polyimide and a polyether imide; cellulose resins, such as cellophane, cellulose acetate, nitrocellulose, cellulose acetate propionate (CAP), and cellulose acetate butyrate (CAB); styrene resins, such as polystyrene (PS); polycarbonates; and ionomer resins.

Among the above resin materials, polyesters are preferable, PET and PEN are further preferable, and PET is particularly preferable in terms of mechanical strength and glossiness.

In the case where the metal-containing layer is interposed between the front substrate and the porous layer, that is, in the case where the metal-containing layer is disposed below the front substrate, the front substrate may be required to have high transparency and high glossiness in consideration of the specular glossiness of a printed material. In terms of transparency and glossiness, among the above resin materials, polyesters are preferable and PET and PEN are further preferable. A colored substrate or a substrate including a coloring layer may be also used as a front substrate. A substrate including inorganic or organic particles may be also used as a front substrate.

In the case where the front substrate is interposed between the metal-containing layer and the porous layer, that is, the metal-containing layer is disposed above the front substrate, the transparency of the front substrate is not limited. For example, an opaque white film formed of a mixture of the resin material with a white pigment and a filler and a film having voids formed therein may be also used.

The term "(meth)acryl" used herein includes both "acryl" and "methacryl". The term "(meth)acrylate" used herein includes both "acrylate" and "methacrylate".

A laminate including two or more films described above that are stacked on top of one another may be used as a substrate. The laminate can be formed using dry lamination, wet lamination, extrusion, or the like.

The thickness of the front substrate is preferably 5 µm or more and 150 µm or less, is more preferably 7 µm or more and 75 µm or less, is further preferably 10 µm or more and 50 µm or less, and is particularly preferably 10 µm or more and 23 µm or less. This further enhances curling inhibiting property.

In the case where the front substrate is a resin film, the resin film may be either a stretched or unstretched film. In terms of strength, a uniaxially or biaxially stretched film is preferable.

### (Porous Layer)

The thermal transfer image-receiving sheet according to the present disclosure includes at least one porous layer. This enhances the density of an image that is to be formed on the receiving and the transferability of the protective layer onto the receiving layer.

In one embodiment, the porous layer is constituted by a porous film having fine voids formed therein.

Examples of the resin material constituting the porous film include polyolefins, such as PE and PP; vinyl resins, such as polyvinyl acetate, a vinyl chloride-vinyl acetate copolymer, and an ethylene-vinyl acetate copolymer; polyesters, such as PET and PBT; styrene resins; and polyamides.

Among these, PP and PET are particularly preferable in terms of the flatness and smoothness, thermal insulation properties, and cushioning properties of the film.

The porous film may contain the above additives.

The porous film can be produced by a common method known in the related art. The porous film can be produced by, for example, kneading the above resin material with organic or inorganic particles immiscible with the resin material and forming the resulting mixture into a film.

In one embodiment, the porous film can be produced by, for example, mixing a first resin material with a second resin material having a higher melting temperature than the first resin material and forming the resulting mixture into a film.

The porous film is not limited to a porous film produced by any of the above-described methods; commercially available porous films may be also used.

The thickness of the porous film is preferably 10 µm or more and 100 µm or less, is further preferably 15 µm or more and 50 µm or less, and is particularly preferably 16 µm or more and 30 µm or less. This further enhances the density of an image that is to be formed on the receiving layer and the transferability of the protective layer onto the receiving layer. Furthermore, curling inhibiting property can be enhanced.

In one embodiment, the porous layer is a hollow particle-containing layer that contains hollow particles and a binder material.

The hollow particles may be organic hollow particles made of a resin material or the like or inorganic hollow particles made of glass or the like. Organic hollow particles are preferably used in order to enhance dispersibility.

Examples of the resin material constituting the organic hollow particles include a styrene resin, a (meth)acrylic resin, a phenolic resin, a fluororesin, a polyamide, an imide resin, and a polycarbonate.

The hollow particles may be either foamed particles or non-foamed particles.

In one embodiment, the hollow particles can be prepared by, for example, adding a blowing agent, such as a butane gas, into resin particles or the like and heating the resin particles to induce foaming. In one embodiment, the hollow particles can be also prepared by using emulsion polymerization.

Alternatively, commercially available hollow particles may be used.

Examples of the binder material contained in the hollow particle-containing layer include a polyurethane, a polyester, a cellulose resin, a vinyl resin, a (meth)acrylic resin, a polyolefin, a styrene resin, gelatin and derivatives thereof, a styrene acrylic acid ester, polyvinyl alcohol, polyethylene oxide, polyvinylpyrrolidone, pullulan, dextran, dextrin, polyacrylic acid and salts thereof, agar, κ-carrageenan, λ-carrageenan, ι-carrageenan, casein, xanthan gum, locust bean gum, alginic acid, and gum arabic. Among these, a styrene acrylic acid ester is preferably used in order to impart the functions of an adhesive layer to the porous layer.

The content of the binder material in the hollow particle-containing layer is preferably 20% by mass or more and 75% by mass or less and is further preferably 50% by mass or more and 70% by mass or less. This further enhances the density of an image that is to be formed on the receiving layer and the transferability of the protective layer onto the receiving layer.

The hollow particle-containing layer may contain the above additives.

The thickness of the hollow particle-containing layer is preferably 10 µm or more and 100 µm or less, is further preferably 15 µm or more and 50 µm or less, and is particularly preferably 16 µm or more and 30 µm or less. This further enhances the density of an image that is to be formed on the receiving layer and the transferability of the protective layer onto the receiving layer. Furthermore, curling inhibiting property can be enhanced.

The hollow particle-containing layer can be formed by dispersing or dissolving the above materials in water or an appropriate solvent, applying the resulting coating liquid onto an appropriate layer by any of the above-described coating methods, and drying the resulting coating film.

### (Rear Substrate)

A paper substrate or the above-described resin film can be used as a rear substrate. Examples of the paper substrate include condenser paper, glassine paper, sulfuric acid paper, synthetic paper, woodfree paper, art paper, coated paper, uncoated paper, cast coated paper, wall paper, cellulose fiber paper, synthetic resin-containing paper, lining paper, and impregnated paper (synthetic resin-impregnated paper, emulsion-impregnated paper, or synthetic rubber latex-impregnated paper).

An opaque white film formed using a white pigment and a filler and a film having voids formed therein may be also used as a resin film.

Among these, coated paper and uncoated paper are preferable in terms of transportability inside a printer and mechanical strength.

A laminate including the above paper substrate and the above resin film stacked on top of each other may be also used.

The thickness of the rear substrate is preferably 50 µm or more and 300 µm or less in consideration of mechanical strength. The thickness of the rear substrate is further preferably 90 µm or more and 165 µm or less in consideration of curling inhibiting property.

In the case where the rear substrate is a resin film, the resin film may be either a stretched or unstretched film. In terms of strength, a uniaxially or biaxially stretched film is preferable.

### (Metal-Containing Layer)

In a first aspect, the metal-containing layer is a vapor-deposited film. The type of the vapor-deposited film is not limited; the vapor-deposited film can be formed using a metal, such as aluminum, zinc, silicon, magnesium, calcium, potassium, tin, sodium, titanium, lead, or zirconium, or an oxide of the metal.

The thickness of the vapor-deposited film is, for example, 1 nm or more and 150 nm or less.

The vapor-deposited film can be formed on the surface of the front substrate or the like by a common method known in the related art. Examples of the known method include physical vapor deposition (PVD), such as vacuum vapor deposition, sputtering, or ion plating; and chemical vapor deposition (CVD), such as plasma-enhanced chemical vapor deposition, thermal chemical vapor deposition, or photochemical vapor deposition.

In a second aspect, the metal-containing layer contains at least one metal pigment and at least one resin material.

Examples of the metal pigment include particles of aluminum, nickel, chromium, brass, tin, brass, bronze, zinc, silver, platinum, gold, and oxides of the above metals; and glass particles on which a metal has been deposited by vapor deposition.

The content of the metal pigment in the metal-containing layer is preferably 20% by mass or more and 80% by mass or less and is further preferably 30% by mass or more and 75% by mass or less. This further enhances glossiness.

Examples of the resin material include a polyester, a polyamide, a polyolefin, a vinyl resin, a (meth)acrylic resin, a cellulose resin, a styrene resin, a polycarbonate, and an ionomer resin.

The metal-containing layer may contain the above additives.

In the second aspect, the thickness of the metal-containing layer is preferably 0.5 µm or more and 5 µm or less and is further preferably 1 µm or more and 3 µm or less. This further enhances the specular glossiness of the printed material produced.

In the second aspect, the metal-containing layer can be formed by dispersing or dissolving the above materials in water or an appropriate solvent, applying the resulting coating liquid onto the front substrate or the like by any of the above-described coating methods, and drying the resulting coating film.

In a third aspect, the metal-containing layer is constituted by a metal foil. The metal foil can be appropriately selected from metal foils made of gold, silver, copper, aluminum, zinc, or the like.

The thickness of the metal foil is preferably 5 µm or more and 50 µm or less and is further preferably 10 µm or more and 30 µm or less. This further enhances the specular glossiness of the printed material produced.

The metal foil may be either a metal foil prepared by a common method known in the related art or a commercially available metal foil. The metal foil can be stacked on one of the surfaces of the front substrate or the like with, for example, the adhesive layer, which is described below, being interposed therebetween.

### (Primer Layer)

In one embodiment, the thermal transfer image-receiving sheet according to the present disclosure includes a primer layer interposed between the front substrate and the receiving layer or between the metal-containing layer and the receiving layer. This increases the adhesion between the two layers.

The primer layer includes a resin material. The resin material is not limited and may be any transparent resin material that enables the intended 45-degree specular gloss to be achieved. Examples thereof include a polyester, a polyurethane, a polycarbonate, a (meth)acrylic resin, a styrene resin, a vinyl resin, and a cellulose resin.

The primer layer may contain the above additives.

The thickness of the primer layer is, for example, 0.1 µm or more and 3.0 µm or less_{.}

The hollow particle-containing layer can be formed by dispersing or dissolving the above materials in water or an appropriate solvent, applying the resulting coating liquid onto the front substrate, the metal-containing layer, or the like by any of the above-described coating methods, and drying the resulting coating film.

### (Adhesive Layer)

The thermal transfer image-receiving sheet according to the present disclosure includes an adhesive layer interposed between any two layers. This increases the adhesion between the two layers.

The adhesive layer contains a resin material. Examples thereof include vinyl resins, such as polyvinyl acetate, PVB, an ethylene-vinyl acetate copolymer, and a vinyl chloride-vinyl acetate copolymer; polyolefins, such as PE and PP; polyesters, such as PET and PBT; a polyamide; an imide resin; (meth)acrylic resins, such as a polyacrylate, a polymethacrylate, and a polymethyl methacrylate; cellulose resins, such as cellulose diastase; polyol resins; and polyurethanes.

In the case where the adhesive layer contains a polyol resin, the adhesive layer preferably contains an isocyanate compound.

The adhesive layer may contain the above additives.

The thickness of the adhesive layer is, for example, 0.5 µm or more and 10 µm or less.

The adhesive layer can be formed by dispersing or dissolving the above materials in water or an appropriate solvent, applying the resulting coating liquid onto an appropriate layer by any of the above-described coating methods, and drying the resulting coating film.

In one embodiment, the adhesive layer can be formed by melt-extruding a resin composition containing the above materials.

### (Rear Surface Layer)

In one embodiment, the thermal transfer image-receiving sheet according to the present disclosure includes a rear surface layer disposed below the rear substrate. This enhances the transportability of the thermal transfer image-receiving sheet in a printer. Furthermore, curling inhibiting property can be further enhanced.

The rear surface layer contains at least one resin material. Examples thereof include a polyolefin, a vinyl resin, a (meth)acrylic resin, a cellulose resin, a polyester, a polyamide, a polycarbonate, a styrene resin, and a polyurethane.

Among these, a polyolefin is preferable and a polyethylene is further preferable in terms of curling inhibiting property. Low-density polyethylene (LDPE, density: 0.910 g/cm³ or more and less than 0.930 g/cm³) and high-density polyethylene (HDPE, density: 0.942 g/cm³ or more) are particularly preferable.

The ratio between the contents of HDPE and LDPE (HDPE content/LDPE content) is preferably, by mass, 1/9 or more and 9/1 or less and is further preferably, by mass, 3/7 or more and 9/1 or less. This further enhances curling inhibiting property and further improves transportability in a printer.

In one embodiment, the rear surface layer contains a filler. Examples of the filler include an organic filler made of a resin material, such as a (meth)acrylic resin, a polyamide, or a polyolefin; and an inorganic filler made of an inorganic material, such as silicon dioxide particles, calcium carbonate particles, or titanium oxide particles. Alternatively, an organic-inorganic hybrid filler may be also used.

The rear surface layer may contain the above additives.

The thickness of the rear surface layer is preferably 1 µm or more and 50 µm or less, is more preferably 5 µm or more and 35 µm or less, and is further preferably 8 µm or more and 28 µm or less. This further enhances curling inhibiting property and further improves transportability in a printer.

The rear surface layer can be formed by dispersing or dissolving the above materials in water or an appropriate solvent, applying the resulting coating liquid onto the rear substrate or the like by any of the above-described coating methods, and drying the resulting coating film.

Alternatively, the rear surface layer can be also formed by melt-extruding the above materials onto the rear substrate or the like (melt-extruded layer). This method makes it easy to adjust the thickness of the rear surface layer and further enhances curling inhibiting property.

### (Intermediate Layer)

In one embodiment, the thermal transfer image-receiving sheet according to the present disclosure includes an intermediate layer that is a layer adjacent to the porous layer. Since the degree of flatness and smoothness of the surface of the porous layer (in particular, the hollow particle-containing layer) may be low, the adhesion of the porous layer to the front substrate, the metal-containing layer, the rear substrate, or the like may be reduced. Arranging an intermediate layer adjacent to the porous layer enhances the flatness and smoothness of the surface of the porous layer and thereby increases the adhesion of the porous layer to the front substrate, the metal-containing layer, the rear substrate, or the like.

The intermediate layer may be disposed either above or below the porous layer. The intermediate layer may be disposed both above and below the porous layer.

The intermediate layer contains a resin material. Examples thereof include a polyester, a polyurethane, a polycarbonate, a (meth)acrylic resin, a styrene resin, a vinyl resin, and a cellulose resin.

The intermediate layer may contain the above additives.

The thickness of the intermediate layer is, for example, 0.1 µm or more and 3.0 µm or less.

The intermediate layer can be formed by dispersing or dissolving the above materials in water or an appropriate solvent, applying the resulting coating liquid onto the porous layer by any of the above-described coating methods, and drying the resulting coating film.

### (Printed Material)

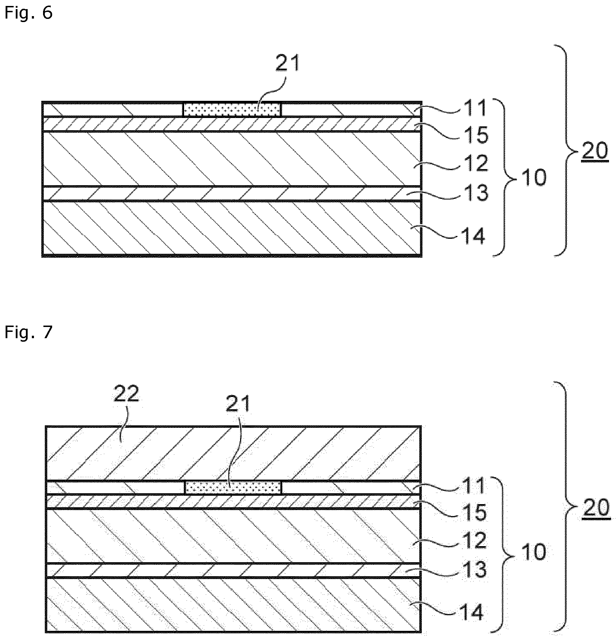

A printed material 20 according to the present disclosure is a printed material fabricated using the above-described thermal transfer image-receiving sheet. The printed material 20 includes, as illustrated in Fig. 6, a receiving layer 11, a metal-containing layer 15, a front substrate 12, a porous layer 13, and a rear substrate 14. An image 21 is formed on or in the receiving layer 11. Although Fig. 6 illustrates a case where the metal-containing layer 15 is interposed between the receiving layer 11 and the front substrate 12, the layer arrangement is not limited to this; alternatively, the metal-containing layer 15 may be interposed between the front substrate 12 and the porous layer 13.

In one embodiment, the printed material 20 according to the present disclosure includes, as illustrated in Fig. 7, a protective layer 22 disposed on the receiving layer 11, on or in which an image is formed. The protective layer may be disposed on only a part of the receiving layer.

Details of each of the layers included in the printed material according to the present disclosure are described below. The layers having the same structures as in the thermal transfer image-receiving sheet are not described hereinafter.

### (Image)

The printed material includes an image formed on the receiving layer. The types of the image is not limited and may be a character, a texture, a symbol, or a combination thereof. The method for forming an image on the receiving layer is not limited. The image can be formed on the receiving layer by using a common sublimation thermal transfer recording-type or thermofusible transfer recording-type thermal transfer sheet known in the related art.

### (Protective Layer)

A protective layer is disposed on the receiving layer. This enhances the abrasion resistance, preservation stability, etc. of the image formed on the receiving layer.

The protective layer contains at least one resin material. The resin material is not limited and may be any transparent resin material. Examples thereof include a (meth)acrylic resin, a styrene resin, a vinyl resin, a polyolefin, a polyester, a polyamide, an imide resin, a cellulose resin, a thermosetting resin, and an active light-curable resin.

The term "active light-cured resin" used herein refers to an active light-curable resin cured by being irradiated with active light.

The term "active light" used herein refers to radiation that chemically acts on an active light-curable resin and facilitates polymerization and specifically to visible light, ultraviolet light, X-ray, an electron beam, α-ray, β-ray, and γ-ray.

The content of the resin material in the protective layer is not limited but is preferably 50% by mass or more and 95% by mass or less in consideration of the abrasion resistance and preservation stability of the image.

The protective layer may contain the above additives.

The thickness of the protective layer is preferably 3 µm or more and 10 µm or less and is further preferably 5 µm or more and 10 µm or less. This further enhances the abrasion resistance, preservation stability, etc. of the image.

### EXAMPLES

The present disclosure is described further in detail with reference to Examples below. Note that the present disclosure is not limited by Examples below.

### Example 1

A PET film A having a thickness of 25 µm (Metalight K-Y-27-CR produced by Toyobo Co., Ltd.), which included an aluminum film having a thickness of 45 nm which was vapor-deposited on one of the surfaces, was provided as a front substrate.

An adhesive layer-forming coating liquid having the following formulation was applied onto the surface of the front substrate on which the vapor-deposited film was present. The resulting coating film was dried to form an adhesive layer having a thickness of 2.4 µm. A porous PP film A (SP-U produced by Mitsui Chemicals Tohcello Inc., thickness: 36 µm), which served as a porous layer, was stacked on the front substrate with the adhesive layer being interposed therebetween.

### <Adhesive Layer-Forming Coating Liquid>

| | |
|---|---|
| • Polyol resin: | 30 parts by mass |

(TAKELAC (registered trademark) A-969V produced by Mitsui Chemicals, Inc.)

| | |
|---|---|
| • Isocyanate compound: | 10 parts by mass |

(TAKENATE (registered trademark) A-5 produced by Mitsui Chemicals, Inc.)

| | |
|---|---|
| • Ethyl acetate: | 60 parts by mass |

An adhesive layer-forming coating liquid having the above formulation was applied onto a surface of the porous PP film A which was opposite to the surface on which the front substrate was stacked. The resulting coating film was dried to form an adhesive layer having a thickness of 2.4 µm. A coated paper sheet A (Utrillo (registered trademark) 157 produced by Nippon Paper Industries Co., Ltd., thickness: 130 µm), which served as a rear substrate, was stacked on the porous layer with the adhesive layer being interposed therebetween.

A resin composition A containing HDPE and LDPE (HDPE:LDPE = 8:2) was melt-extruded onto a surface of the rear substrate which was opposite to the surface on which the porous PP film A was stacked, in order to form a rear surface layer having a thickness of 24 µm.

A primer layer-forming coating liquid having the following formulation was applied onto a surface of the front substrate on which the vapor-deposited film was absent. The resulting coating film was dried to form a primer layer having a thickness of 2.5 µm.

### <Primer Layer-Forming Coating Liquid>

| | |
|---|---|
| • Urethane resin: | 30 parts by mass |

(NIPPOLLAN (registered trademark) produced by Tosoh Corporation)

| | |
|---|---|
| • Methyl ethyl ketone (MEK): | 15 parts by mass |

A receiving layer-forming coating liquid having the following formulation was applied onto the primer layer. The resulting coating film was dried to form a receiving layer having a thickness of 4 µm. Hereby, a thermal transfer image-receiving sheet according to the present disclosure was obtained.

### <Receiving Layer-Forming Coating Liquid>

| | |
|---|---|
| • Vinyl chloride-vinyl acetate copolymer: | 60 parts by mass |

(SOLBIN (registered trademark) C produced by Nissin Chemical Industry Co., Ltd.)

| | |
|---|---|
| • Epoxy-modified silicone resin: | 1.2 parts by mass |

(X-22-3000T produced by Shin-Etsu Chemical Co., Ltd.)

| | |
|---|---|
| • Methylstyl-modified silicone resin: | 0.6 parts by mass |

(X-24-510 produced by Shin-Etsu Chemical Co., Ltd.)

| | |
|---|---|
| • MEK: | 2.5 parts by mass |
| • Toluene: | 2.5 parts by mass |

### Example 2

A thermal transfer image-receiving sheet was fabricated as in Example 1, except that the porous PP film A was changed to a porous PET film A (FK003 produced by Toyobo Co., Ltd., thickness: 38 µm).

### Example 3

A coated paper sheet A was provided as a rear substrate. A porous layer-forming coating liquid having the following formulation was applied onto the coated paper sheet A. The resulting coating film was dried to form a porous layer having a thickness of 30 µm.

### (Porous Layer-Forming Coating Liquid)

| | |
|---|---|
| • Hollow particles: | 70 parts by mass |

(HP-91 produced by Rohm and Haas Company, average particle size: 1 µm)
- Styrene acrylic acid ester: 30 parts by mass

(SX1707A produced by Zeon Corporation)

| | |
|---|---|
| • Water: | 10 parts by mass |

An intermediate layer-forming coating liquid having the following formulation was applied onto the porous layer. The resulting coating film was dried to form an intermediate layer having a thickness of 2 µm. Hereby, a laminate including a rear substrate, a porous layer, and an intermediate layer was obtained.

### (Intermediate Layer-Forming Coating Liquid)

| | |
|---|---|
| • (Meth)acrylic resin: | 100 parts by mass |

(B-4100 produced by Mitsui Chemicals, Inc., solid content: 37%)

| | |
|---|---|
| • Polyvinylpyrrolidone: | 77 parts by mass |

(VIVI PRINT540 produced by ISP Japan, solid content: 12%)

| | |
|---|---|
| • Water: | 30 parts by mass |
| • Isopropyl alcohol (IPA): | 24 parts by mass |

Subsequently, a PET film A was provided as a front substrate. An adhesive layer coating liquid having the above formulation was applied onto a surface of the front substrate on which a vapor-deposited film was present. The resulting coating film was dried to form an adhesive layer having a thickness of 2.4 µm. Then, the front substrate was stacked on the surface of the intermediate layer side of the laminate fabricated in the above-described manner, with the adhesive layer being interposed therebetween.

The resin composition A was melt-extruded onto the other surface of the rear substrate to form a rear surface layer having a thickness of 24 µm.

A primer layer-forming coating liquid having the above formulation was applied onto a surface of the front substrate on which the porous layer was not formed. The resulting coating film was dried to form a primer layer having a thickness of 2.5 µm.

A receiving layer-forming coating liquid having the above formulation was applied onto the primer layer. The resulting coating film was dried to form a receiving layer having a thickness of 4 µm. Hereby, a thermal transfer image-receiving sheet according to the present disclosure was obtained.

### Example 4

A PET film A was provided as a front substrate.

An adhesive layer-forming coating liquid having the above formulation was applied onto a surface of the front substrate on which the vapor-deposited film was absent. The resulting coating film was dried to form an adhesive layer having a thickness of 2.4 µm. A porous PP film A used as a porous layer was stacked on the front substrate with the adhesive layer being interposed therebetween.

An adhesive layer-forming coating liquid having the above formulation was applied onto a surface of the porous PP film A which was opposite to the surface on which the front substrate was stacked. The resulting coating film was dried to form an adhesive layer having a thickness of 2.4 µm. A coated paper sheet A used as a rear substrate was stacked on the porous layer with the adhesive layer being interposed therebetween.

The resin composition A was melt-extruded onto a surface of the rear substrate which was opposite to the surface on which the porous PP film A was stacked, in order to form a rear surface layer having a thickness of 24 µm.

A primer layer-forming coating liquid having the above formulation was applied onto a surface of the front substrate on which a vapor-deposited film was present. The resulting coating film was dried to form a primer layer having a thickness of 2.5 µm.

A receiving layer-forming coating liquid having the above formulation was applied onto the primer layer. The resulting coating film was dried to form a receiving layer having a thickness of 4 µm. Hereby, a thermal transfer image-receiving sheet according to the present disclosure was obtained.

### Example 5

A thermal transfer image-receiving sheet was obtained as in Example 1, except that the thickness of the rear surface layer was changed to 16 µm.

### Example 6

A thermal transfer image-receiving sheet was obtained as in Example 1, except that the porous PP film A was changed to a porous PP film B (SP-U produced by Mitsui Chemicals Tohcello Inc., thickness: 23 µm) and the thickness of the rear surface layer was changed to 16 µm.

### Example 7

A thermal transfer image-receiving sheet was obtained as in Example 1, except that the front substrate was changed to a PET film B (BR-PET1012 produced by Toray Industries, Inc., thickness: 12 µm) including an aluminum film having a thickness of 45 nm which was vapor-deposited on one of the surfaces, the rear substrate was changed to an uncoated paper sheet A (Noncoat K-156 produced by Kitakami HiTec Paper Corporation, thickness: 156 µm), and the thickness of the rear surface layer was changed to 16 µm.

### Example 8

A thermal transfer image-receiving sheet was obtained as in Example 1, except that the front substrate was changed to a PET film B.

### Example 9

A thermal transfer image-receiving sheet was obtained as in Example 1, except that the front substrate was changed to a PET film B and the rear substrate was changed to an uncoated paper sheet A.

### Example 10

A thermal transfer image-receiving sheet was obtained as in Example 1, except that the front substrate was changed to a PET film B, the porous PP film A was changed to a porous PP film B, and the rear substrate was changed to an uncoated paper sheet A.

### Example 11

A thermal transfer image-receiving sheet was obtained as in Example 1, except that the front substrate was changed to a PET film B, the porous PP film A was changed to a porous PP film B, the rear substrate was changed to an uncoated paper sheet A, and the thickness of the rear surface layer was changed to 16 µm.

### Example 12

A PET film B was provided as a front substrate. A porous PP film B was provided as a porous layer.

The resin composition A was melt-extruded into a gap between the surface of the front substrate on which a vapor-deposited film was present and the porous PP film B to form an adhesive layer having a thickness of 14 µm and allow the two layers to be stacked on top of each other.

An adhesive layer-forming coating liquid having the above formulation was applied onto a surface of the porous PP film B on which the adhesive layer was not formed. The resulting coating film was dried to form an adhesive layer having a thickness of 2.4 µm. An uncoated paper sheet A, which served as a rear substrate, was stacked on the porous layer with the adhesive layer being interposed therebetween.

The resin composition A was melt-extruded onto a surface of the rear substrate which was opposite to the surface on which the porous PP film B was stacked, in order to form a rear surface layer having a thickness of 16 µm.

A primer layer-forming coating liquid having the above formulation was applied onto the other surface of the front substrate. The resulting coating film was dried to form a primer layer having a thickness of 2.5 µm.

A receiving layer-forming coating liquid having the above formulation was applied onto the primer layer. The resulting coating film was dried to form a receiving layer having a thickness of 4 µm. Hereby, a thermal transfer image-receiving sheet according to the present disclosure was obtained.

### Comparative Example 1

A PET film A was provided as a front substrate.

An adhesive layer coating liquid having the above formulation was applied onto a surface of the front substrate on which a vapor-deposited film was present. The resulting coating film was dried to form an adhesive layer having a thickness of 2.4 µm. A coated paper sheet A, which served as a rear substrate, was stacked on the front substrate with the adhesive layer being interposed therebetween.

The resin composition A was melt-extruded onto a surface of the rear substrate which was opposite to the surface on which the PET film A was stacked, in order to form a rear surface layer having a thickness of 30 µm.

A primer layer-forming coating liquid having the above formulation was applied onto the other surface of the front substrate. The resulting coating film was dried to form a primer layer having a thickness of 2.5 µm.

A receiving layer-forming coating liquid having the above formulation was applied onto the primer layer. The resulting coating film was dried to form a receiving layer having a thickness of 4 µm. Hereby, a thermal transfer image-receiving sheet was obtained.

### Comparative Example 2

A thermal transfer image-receiving sheet was fabricated as in Example 1, except that the porous PP film A was changed to a porous PP film C (thickness: 10 µm).

### Comparative Example 3

A porous PP film A was provided as a porous layer.

An adhesive layer-forming coating liquid having the above formulation was applied onto one of the surfaces of the porous PP film A. The resulting coating film was dried to form an adhesive layer having a thickness of 2.4 µm. A coated paper sheet A, which served as a rear substrate, was stacked on the porous layer with the adhesive layer being interposed therebetween.

The resin composition A containing HDPE and LDPE was melt-extruded onto a surface of the rear substrate which was opposite to the surface on which the porous PP film A was stacked, in order to form a rear surface layer having a thickness of 30 µm.

A primer layer-forming coating liquid having the above formulation was applied onto the other surface of the porous PP film. The resulting coating film was dried to form a primer layer having a thickness of 2.5 µm.

A receiving layer-forming coating liquid having the above formulation was applied onto the primer layer. The resulting coating film was dried to form a receiving layer having a thickness of 4 µm. Hereby, a thermal transfer image-receiving sheet was obtained.

### <<Measurement of Thermal Conductivity>>

The thermal conductivity of each of the thermal transfer image-receiving sheets obtained in Examples and Comparative examples was measured with a thermal conductivity meter (QTM-500 produced by Kyoto Electronics Manufacturing Co., Ltd.) in accordance with the transient hot wire method described in JIS R 2616 (published in 2001). Table 1 lists the measurement results.

Note that thermal conductivity was measured on the receiving layer-side of the thermal transfer image-receiving sheet in a room temperature environment.

### <<Measurement of Martens Hardness>>

The Martens hardness of each of the thermal transfer image-receiving sheets obtained in Examples and Comparative examples was measured with a hardness meter (FISCHERSCOPE H100VS produced by Fitech) in accordance with ISO 14577:2002. Table 1 lists the measurement results.

Note that Martens hardness was measured on the receiving layer-side of the thermal transfer image-receiving sheet in a room temperature environment.

### <<45-Degree Specular Gloss>>

The 45-degree specular gloss of each of the thermal transfer image-receiving sheets obtained in Examples and Comparative examples was measured with a gloss meter (VG 7000 produced by Nippon Denshoku Industries Co., Ltd.) in accordance with the method for measuring 45-degree specular gloss described in JIS Z 8741 (published in 1997). In the measurement, the 45-degree specular gloss on the receiving layer was measured. Table 1 lists the measurement results.

### <<Evaluation of Protective Layer Transferability>>

A specific one of the thermal transfer image-receiving sheets obtained in Examples and Comparative examples above, a sublimation thermal transfer printer (DS620 produced by Dai Nippon Printing Co., Ltd.), and a genuine ribbon for the above printer, which included a dye layer containing a sublimation dye and a protective layer, were provided.

A white solid image was printed in a 20°C/30%RH environment in order to obtain a printed material that included the protective layer transferred on the receiving layer. Note that the printer was set to a gloss mode. The color shades of the white solid image was 255/255.

The resulting printed material was visually inspected and evaluated in accordance with the following evaluation standard. Table 1 lists the evaluation results.

### (Evaluation Standard)

A: Portions on which the protective layer was not transferred were not present; high protective layer transferability was confirmed.
B: Portions on which the protective layer was not transferred were locally present but visually negligible; protective layer transferability was confirmed.
C: Portions on which the protective layer was not transferred were present.

### <<Evaluation of Image Density>>

A specific one of the thermal transfer image-receiving sheets obtained in Examples and Comparative examples above, the above sublimation thermal transfer printer, and the genuine ribbon for the above printer were provided. A black solid image was printed in a 20°C/30%RH environment in order to obtain a printed material. Note that the printer was set to a gloss mode. The color shades of the black solid image was 0/255.

The density of the image of the resulting printed material was measured with an optical densitometer ("i1Pro2" produced by X-Rite, Inc.) and evaluated in accordance with the following evaluation standard. Table 1 lists the evaluation results.

The measurement was conducted under the following conditions.

### (Evaluation Standard)

A: O.D value was 2.85 or more
B: O.D value was 2.80 or more and less than 2.85
C: O.D value was 2.30 or more and less than 2.80
D: O.D value was 2.00 or more and less than 2.30
E: O.D value was less than 2.00

### (Measurement Conditions)

- Density status: Status A
- Lighting conditions: M0 (ISO 13655-2009)

### <<Evaluation of Specular Glossiness>>

The printed material obtained in the above image density evaluation was visually inspected and evaluated in accordance with the following evaluation standard. Table 1 lists the evaluation results.

### (Evaluation Standard)

A: It was confirmed that the printed material had markedly high specular glossiness.
B: The glossiness of the printed material was insufficient.

### <<Evaluation of Curling Inhibiting Property - 1>>

A gray solid image was formed on the receiving layer included in a specific one of the thermal transfer image-receiving sheets obtained in Examples and Comparative examples above with the above sublimation thermal transfer printer and the genuine ribbon for the above printer. Hereby, a printed material having a length of 152.4 mm and a width of 203.2 mm was obtained. Note that the printer was set to a gloss mode. The color shades of the gray solid image was 128/255.

The above printed material was left to stand in an environment of 35°C and a relative humidity of 15% for 100 hours.

The printed material that had been left to stand was placed on a flat stage, and the heights of the four corners from the stage were measured. Specifically, in the case where the printed material was curled such that the receiving layer-side surface was concave, the printed material was placed on the flat stage with the receiving layer-side surface facing upward. In the case where the printed material was curled such that the receiving layer-side surface was convex, the printed material was placed on the flat stage with the receiving layer-side surface facing downward. The heights of the four corners from the stage were averaged to determine the average amount of curling, which was evaluated in accordance with the following evaluation standard. Table 1 lists the evaluation results.

### (Evaluation Standard)

A: Average amount of curling was less than 30 mm
B: Average amount of curling was 30 mm or more and less than 40 mm
C: Average amount of curling was 40 mm or more and less than 50 mm
D: Average amount of curling was 50 mm or more and less than 55 mm
E: Average amount of curling was 55 mm or more

### <<Curling Inhibiting Property - 2>>

The average amount of curling was determined as in "Evaluation of Curling Inhibiting Property - 1", except that the printed material was left to stand in an environment of 20°C and a relative humidity of 60% for 1 week. The average amount of curling was evaluated in accordance with the following evaluation standard. Table 1 lists the evaluation results.

### (Evaluation Standard)

A: Average amount of curling was less than 5 mm
B: Average amount of curling was 5 mm or more and less than 10 mm
C: Average amount of curling was 10 mm or more and less than 15 mm
D: Average amount of curling was 15 mm or more

### <<Evaluation of Curling Inhibiting Property - 3>>

A specific one of the thermal transfer image-receiving sheets obtained in Examples and Comparative examples above was cut into a size having a length of 152.4 mm and a width of 5.5 mm to form a specimen.

This specimen was left to stand in an environment of 35°C and a relative humidity of 15% for 100 hours.

The specimen that had been left to stand was placed on a flat stage, and the heights of the four corners from the stage were measured. Specifically, in the case where the specimen was curled such that the receiving layer-side surface was concave, the specimen was placed on the flat stage with the receiving layer-side surface facing upward. In the case where the specimen was curled such that the receiving layer-side surface was convex, the specimen was placed on the flat stage with the receiving layer-side surface facing downward. The heights of both ends from the stage were averaged to determine the average amount of curling, which was evaluated in accordance with the following evaluation standard. Table 1 lists the evaluation results.

### (Evaluation Standard)

A: Average amount of curling was less than 30 mm
B: Average amount of curling was 30 mm or more and less than 40 mm
C: Average amount of curling was 40 mm or more and less than 50 mm
D: Average amount of curling was 50 mm or more and less than 55 mm
E: Average amount of curling was 55 mm or more

**[Table 1]**

| Table 1 | Thickness of front substrate (µm) | Thickness of porous layer (µm) | Material constituting porous layer | Thickness of rear substrate rear(µm) | Material constituting rear substrate | Thickness of rear surface layer (µm) | Thermal conductivity (W/m·K) | Martens hardness (N/mm²) | 45-Degree specular gloss (%) | Protective layer transferability | Image density | Specular glossiness | Evaluation of curling inhibiting property -1 | Evaluation of curling inhibiting property -2 | Evaluation of curling inhibiting property -3 |
|---|---|---|---|---|---|---|---|---|---|---|---|---|---|---|---|
| Example 1 | 25 | 36 | Porous PP film | 130 | Coated paper | 24 | 0.366 | 5.18 | 1120 | A | A | A | D | C | D |
| Example 2 | 25 | 38 | Porous PET film | 130 | Coated paper | 24 | 0.354 | 8.07 | 1117 | A | A | A | D | C | D |
| Example 3 | 25 | 30 | Hollow particle-containing layer | 130 | Coated paper | 24 | 0.370 | 6.60 | 1121 | B | B | A | D | C | D |
| Example 4 | 25 | 36 | Porous PP film | 130 | Coated paper | 24 | 0.367 | 5.16 | 1121 | A | A | A | D | C | D |
| Example 5 | 25 | 36 | Porous PP film | 130 | Coated paper | 16 | 0.362 | 4.89 | 1113 | A | A | A | C | B | C |
| Example 6 | 25 | 23 | Porous PP film | 130 | Coated paper | 16 | 0.358 | 4.75 | 1118 | A | A | A | B | A | B |
| Example 7 | 12 | 36 | Porous PP film | 156 | Uncoated paper | 16 | 0.364 | 4.02 | 1115 | A | A | A | A | A | A |
| Example 8 | 12 | 36 | Porous PP film | 130 | Coated paper | 24 | 0.364 | 3.30 | 1123 | A | A | A | C | B | C |
| Example 9 | 12 | 36 | Porous PP film | 156 | Uncoated paper | 24 | 0.361 | 4.13 | 1136 | A | A | A | A | A | A |
| Example 10 | 12 | 23 | Porous PP film | 156 | Uncoated paper | 24 | 0.363 | 2.97 | 1132 | A | A | A | A | A | B |
| Example 11 | 12 | 23 | Porous PP film | 156 | Uncoated paper | 16 | 0.360 | 3.01 | 1115 | A | A | A | A | A | A |
| Example 12 | 12 | 23 | Porous PP film | 156 | Uncoated paper | 16 | 0.370 | 6.80 | 1138 | A | A | A | A | A | A |
| Comparative example 1 | 25 | - | - | 130 | Coated paper | 24 | 0.400 | 12.84 | 1123 | C | C | A | D | C | D |
| Comparative example 2 | 25 | 10 | Porous PP film | 130 | Coated paper | 24 | 0.390 | 11.52 | 1119 | C | C | A | D | C | D |
| Comparative example 3 | - | 36 | Porous PP film | 130 | Coated paper | 24 | 0.342 | 3.23 | 88 | A | D | B | D | C | D |

A thermal transfer image-receiving sheet and a printed material according to an embodiment of the present disclosure are described below. Note that the thermal transfer sheet and the printed material according to the present disclosure are not limited to the embodiment.

The thermal transfer image-receiving sheet according to the present disclosure includes a receiving layer, a front substrate, a porous layer, and a rear substrate in this order.

The thermal transfer image-receiving sheet further includes a metal-containing layer interposed between the receiving layer and the front substrate or between the front substrate and the porous layer.

The thermal conductivity of the thermal transfer image-receiving sheet which is measured on the receiving layer-side of the thermal transfer image-receiving sheet is 0.38 W/m·K or less. The Martens hardness of the thermal transfer image-receiving sheet which is measured on the receiving layer-side is 10.0 N/mm² or less. The 45-degree specular gloss of the thermal transfer image-receiving sheet which is measured on the receiving layer-side is 800 or more.

In one embodiment, the porous layer is a polyethylene terephthalate film or a polypropylene film.

In one embodiment, the porous layer has a thickness of 10 µm or more and 50 µm or less.

In one embodiment, the metal-containing layer is a vapor-deposited film formed on the surface of the front substrate.

In one embodiment, the Martens hardness of the thermal transfer image-receiving sheet which is measured on the receiving layer-side is 5.0 N/mm² or less.

The printed material according to the present disclosure is a printed material produced using the above-described thermal transfer image-receiving sheet.

An image is formed on the receiving layer. The printed material includes a protective layer disposed on the receiving layer.

### Reference Signs List

10: THERMAL TRANSFER IMAGE-RECEIVING SHEET, 11: RECEIVING LAYER, 12: FRONT SUBSTRATE, 13: POROUS LAYER, 14: REAR SUBSTRATE, 15: METAL-CONTAINING LAYER, 16: PRIMER LAYER, 17: ADHESIVE LAYER, 18: REAR SURFACE LAYER, 20: PRINTED MATERIAL, 21: IMAGE, 22: PROTECTIVE LAYER

## Claims

1. A thermal transfer image-receiving sheet comprising a receiving layer, a front substrate, a porous layer, and a rear substrate,
the thermal transfer image-receiving sheet further comprising a metal-containing layer interposed between the receiving layer and the front substrate or between the front substrate and the porous layer,
wherein a thermal conductivity of the thermal transfer image-receiving sheet, the thermal conductivity being measured on a receiving layer-side of the thermal transfer image-receiving sheet, is 0.38 w/m.K or less,
wherein a Martens hardness of the thermal transfer image-receiving sheet, the Martens hardness being measured on the receiving layer-side, is 10.0 N/mm² or less, and
wherein a 45-degree specular gloss of the thermal transfer image-receiving sheet, the 45-degree specular gloss being measured on the receiving layer-side, is 800 or more.

2. The thermal transfer image-receiving sheet according to Claim 1, wherein the porous layer is a polyethylene terephthalate film or a polypropylene film.

3. The thermal transfer image-receiving sheet according to Claim 1 or 2, wherein the porous layer has a thickness of 15 µm or more and 50 µm or less.

4. The thermal transfer image-receiving sheet according to any one of Claims 1 to 3, wherein the metal-containing layer is a vapor-deposited film formed on a surface of the front substrate.

5. The thermal transfer image-receiving sheet according to any one of Claims 1 to 4, wherein the Martens hardness measured on the receiving layer-side is 5.0 N/mm² or less.

6. A printed material produced using the thermal transfer image-receiving sheet according to any one of Claims 1 to 5,
wherein an image is formed on the receiving layer, and
wherein the printed material comprises a protective layer disposed on the receiving layer.
